# EUROPEAN PATENT SPECIFICATION

(11) **EP 4 445 057 B1**
(45) Date of publication and mention of the grant of the patent: **13.05.2026**
(21) Application number: 22904770.9
(22) Date of filing: 30.11.2022
(51) Int. Cl.: F16L 5/04, F24F 11/33, F24F 13/02

(54) **A WALL THROUGH CONNECTION COMPRISING A DUCT PORTION AND A METHOD FOR MOUNTING A WALL THROUGH CONNECTION**
WANDDURCHFÜHRUNG MIT EINEM LEITUNGSABSCHNITT UND VERFAHREN ZUR MONTAGE EINER WANDDURCHFÜHRUNG
RACCORD À TRAVERS LE MUR DOTÉ DE PARTIE CONDUIT ET PROCÉDÉ DE MONTAGE DE RACCORD À TRAVERS LE MUR

(30) Priority: 09.12.2021 SE 2151502
(43) Date of publication of application: 16.10.2024
(73) Proprietor: Climate Recovery Ind AB, 392 39 Kalmar (SE)
(72) Inventor: WALLIN, Peter, 394 77 Kalmar (SE); BERNHARDSSON, Göran, 269 95 Båstad (SE); WALLIN, Andreas, 394 74 Kalmar (SE)
(74) Representative: Noréns Patentbyrå AB
(86) International application number: PCT/SE2022/051125
(87) International publication number: WO 2023/106985

(56) References cited:
- EP-A1- 1 865 271
- WO-A1-2013/081307
- WO-A1-2021/116411
- DE-A1- 19 608 080
- DE-A1- 4 321 307
- DE-A1- 4 321 307
- JP-A- 2018 112 329
- JP-A- 2020 190 340
- US-A- 3 434 502

## Description

The present invention concerns a wall through connection for a ventilation duct system, where the wall through connection is capable of resisting high temperatures. Preferably, the whole ventilation duct system in which the wall through connection is a part of also withstands high temperatures. Document WO2021116411A1 discloses such wall through connection.

There are classifications for the possibility of withstanding high temperatures for wall through connections. Our aim is to provide a wall through connection which when arranged in a through hole in a wall will fulfil at least fire class A2-s1-d0. For example, the wall through connection must not exceed an energy content (PSI value) of 3 MJ/kg in order not to add energy to a possible fire.

At the moment both wall through connections and steel ducts are arranged in buildings, which thereafter are provided with mineral wool to insulate the ducts. The mineral wool is usually attached by means of chicken wire around the ducts and mineral wool.

The aim is also to provide a pre-insulated wall through connection which will be both easily handled and lightweight.

The ducts connected to the wall through connection may be standard ones present on the market, preferably fulfilling the European classification below. Most preferred is our ventilation duct system which will reach the market after the filing of the present application and which is presented in the still non-published patent applications 2151233-0, 2151234-8 and 2151235-5, comprising a fibre layer and an inner layer surrounding a flow space. The fibre layer comprises mineral fibres and a binder, compressed into a desired duct shape and the inner layer is a steel foil having a thickness of 0,01-0,3 mm, facing the flow space. The mineral fibres should have a melting point over 800 degrees Celsius.

In the classifications for the possibility of withstanding high temperatures for ducts, the ducts transfer flue gas and must withstand temperatures between 900 and 1000 degrees Celsius for at least half an hour or at least an hour to fulfil a European classification EN1366 according to EI30/60. This will give people time to evacuate a burning building. According to this classification the cross section must be intact, and the outside temperature of the duct must not exceed 140 degrees Celsius in average and not over 180 degrees Celsius in one point.

### Summary of the invention

According to a first aspect of the invention a wall through connection comprising a duct portion having a fibre layer and an inner layer surrounding an elongated flow space, wherein
- the fibre layer comprises mineral fibres and a binder, compressed into a desired duct shape, the mineral fibres having a melting point over 800 degrees Celsius, and
- the inner layer is a steel foil having a thickness of at least 0,01 mm, facing the flow space. For example, the foil thickness could be 0,01-0,3 mm, preferably 0,01-0,2 mm and most preferred 0,03-0,1.

At least one of either a first sleeve couplings or a second sleeve coupling are arranged on opposite sides of a wall having a throughgoing hole which shall receive the wall through connection.

Each first sleeve coupling has a first flange, orthogonal to a length axis along the elongated flow space, for connection to respective side of the wall and a rim portion more or less parallel with the length axis, facing away from the wall when arranged. The rim portion provides a radial stop for an expanding fire sealing material which is provided in between an outer surface of the duct portion and the rim portion of the first sleeve coupling when arranged in the thronging hole. A second orthogonal flange reaches from the rim portion inwards to the outer surface of the duct portion providing an axial stop for the fire expanding sealing material.

Each second sleeve coupling has an orthogonal flange and a sleeve protruding into the throughgoing hole covering up to half of the depth of the throughgoing hole in the wall when being in position in the throughgoing hole. Expanding fire sealing material is provided between the sleeve of the second sleeve coupling and the outer surface of the duct portion.

This solution provides a sealed yet flexible wall through connection which easily may take up movements of a wall during a fire but still keep the wall through connection sealed so that no flue gases will leak from one room to another. Due to heat expansion walls may expand up to at least 50 mm. The wall through connection is pre-insulated, which minimises the need of separate transports and additional work at the installation place, and lightweight. Further, the wall through connection is also sound dampening. Obviously, the present invention may also be used through a floor/ceiling.

According to some embodiments of the wall through connection, both a first sleeve coupling and a second sleeve coupling are provided on each side of the wall. The second sleeve coupling is preferably attached between the first sleeve coupling and the wall on each side of the wall and the flange is positionable between the first flange of the first sleeve coupling and the side of the wall. This embodiment provides more sealing.

According to some embodiments of the wall through connection, two cuffs are provided one on each side of the wall covering the sleeve coupling, the cuffs are made of mineral fibres having a melting point over 800 degrees Celsius and a binder, compressed into a desired cuff shape. This embodiment provides more heat insulation.

According to some embodiments of the wall through connection, an outer layer is provided on the outside of the fibre layer. The outer layer comprises an aluminium foil and a polyethene layer for attachment to the fibre layer. This make the duct portion easier and safer to handle since the fibres are encapsuled inside the outer layer.

According to some embodiments of the wall through connection, the steel foil is a stainless-steel foil. This protects the ducts from corroding and increase the heat resistance. According to some embodiments of the wall through connection, the fibre layer is self-supported.

According to some embodiments of the wall through connection, the mineral fibre length is at least 10 mm, preferably at least 20 mm or at least 30 mm. Due to the long fibres the compressed fibre layer will stay intact also after the binder is burnt out.

According to some embodiments of the wall through connection, the binder is phenolic based and water soluble.

According to some embodiments of the wall through connection, the ventilation duct lacks binding material between the fibre layer and the inner layer. This keeps the energy level low in the ventilation duct, which keeps the temperature down in the duct.

According to some embodiments of the wall through connection, the cross-sectional shape of the duct portion is more or less circular.

According to the invention, at least one stiffening means is provided at the inner layer in line with the fire expandable sealing material. Thus, a support to withstand the pressure from the expanding fire sealing material is provided, for example.

According to a second aspect of the invention a method of mounting a wall through connection comprising a duct portion having a fibre layer and an inner layer of steel foil is provided. A binder solution is sprayed on the fibre layer, whereafter the fibre layer is compressed into a duct shape, having an elongated flow space, under heated conditions so that water in the binder solution evaporates, and the inner layer is brought into the flow space of the duct, which inner layer seals the flow space of the duct from the fibre layer. Thereafter, bring the duct portion into a throughgoing hole in a wall. Mount at least a first sleeve coupling or a second sleeve coupling on opposite sides of the wall by attaching either a first orthogonal flange to the side of the wall and positioning expanding fire sealing material between a rim portion of the first sleeve coupling and an outer surface of the duct portion or by attaching an orthogonal flange and positioning a sleeve into the throughgoing hole covering up to half of the depth of the throughgoing hole in the wall, and positioning expanding fire sealing material between the sleeve of the second sleeve coupling and the outer surface of the duct portion.

According to some embodiments of the mounting method, both a first sleeve coupling and a second sleeve coupling are provided on opposite sides of the wall, whereby the second sleeve coupling is situated between the first sleeve coupling and the wall on each side of the wall. The second sleeve coupling has an orthogonal flange positionable between the first flange of the first sleeve coupling and the side of the wall.

According to some embodiments of the mounting method, stiffening means are provided at the inner layer, at least in line with the expanding fire sealing material. Thus, in case of fire, the expanding fire sealing material expands and will compress the fibre layer so that no flue gas may leak through the compress fibre layer.

According to some embodiments of the mounting method, two cuffs are positioned, one on each side of the wall, covering the sleeve coupling. The cuffs are made of mineral fibres having a melting point over 800 degrees Celsius and a binder, compressed into a desired cuff shape.

### Short description of the drawings

The present invention will be described in more detail under referral to the drawings, in which
Fig. 1 shows a wall through connections present in a throughgoing hole of a wall according to an embodiment of the invention in a cross-sectional view.
Fig. 2 shows an exploded, perspective view of the embodiment of Fig. 1.

### Detailed description of embodiments of the invention

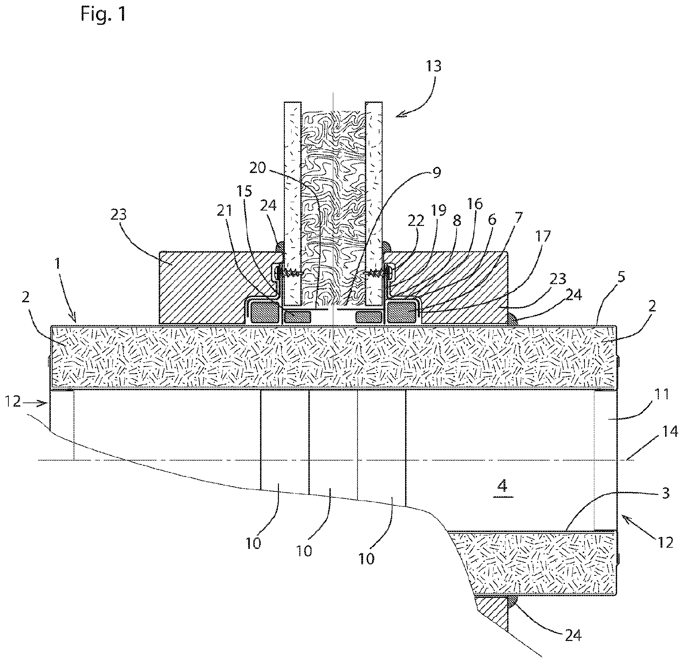

In Fig. 1 an embodiment of a wall through connection having a duct portion 1 comprising a fibre layer 2 and an inner layer 3 surrounding an elongated flow space 4 is shown. The cross-sectional shape may be any suitable shape. A through going hole 9 is present in a wall 13 which is to receive the wall through connection. The throughgoing hole 9 may have the same cross-sectional shape as the duct portion 1. Preferably the throughgoing hole 9 is larger than the duct portion 1. In the shown embodiment the duct portion 1 has a circular shape. A thought length axis 14 is going through the flow space 4 along the length of the duct portion 1 and it has two open ends 12. The duct portion 1 is provided inside the throughgoing hole 9 and attached according to below. Other pieces of a ventilation duct system are positionable at the two open ends 12.

The fibre layer 2 is built up by mineral fibres being compressed with a binder. The mineral fibres should have a melting point over 800 degrees Celsius. The fibres may have a length of at least 10 mm, preferably at least 20 mm or at least or 30 mm. In one embodiment the fibre fulfils the classification RAL/40.

The mineral fibres are sprayed with a binder solution, which preferably is based on a watersoluble phenolic resin. Thereafter the mineral fibres are compressed and heated in a form to reach its final shape. During the compression and heating the water in the binder solution evaporates and the phenolic resin cures at a temperature around 200 degrees Celsius. The amount of binder solution before the forming procedure, i.e., the compression and heating, is between 1-5% by weight. The amount of binder is kept to a minimum in order to avoid adding too much energy into the wall through connection, which energy would increase the temperature in case of fire. It is also conceivable to use other binders than phenolic based.

After the compression and heating step of the fibre layer, the fibre layer is stiff enough to be self-supported so the duct portion 1 is self-supported.

The inner layer 3 is a steel foil having a thickness of at least 0,01 mm, for example 0,01-0,3 mm, preferably 0,01-0,2 mm and most preferred 0,03-0,1. In one embodiment the steel foil is a stainless steel foil. As an example, AISI 304 may be a suitable steel.

According to the embodiment in Fig. 1 the duct portion 1 comprises a fibre layer 2, an inner layer 3 and an outer layer 5. The outer layer 5 comprises at least an aluminium foil and a layer of polyethene. The amount of aluminium may be 15-25 gram/m². The amount of polyethene may be 10-50 g/m², preferably 15-30 g/m². However, the outer layer 5 is optional.

The outer layer 5 comprises a layer of polyethene closest to the fibre layer 2. The polyethene layer functions as a binder and will stick to the fibre layer 2 by a heating step during production where the polyethene melts and thus bonds the outer layer 5 to the fibre layer 2. Outermost is a layer of aluminium provided. In between a mesh, net or spread glass fibres may be provided. The layer of glass fibres would increase the strength of the outer layer 5. Preferably, the aluminium is black on its outside, which promote heat dissipation. Generally, the outer layer 5 is arranged to enhance the look of the ventilation duct and to encapsule the fibres, which increases health standards when working with the wall through connection and the possibility to keep it clean.

As an example, the production of the inner layer can be described. Preferably, two sheets of steel foil may be provided one on top of the other. Along long side edges the steel foils are joined by means of welding, such as seam or spot welding or riveting. It is also possible to unite by means of folding. If needed it is possible to provide sealing material in the joint between the two steel foils. This could for example be expandable fire sealing material.

After uniting the two steel foils they are raised, for example by means of suction on opposite outer sides of the steel foils under a movement away from each other, so that a flow space 4 is formed.

The inner layer 3, for example provided according to above, may be drawn into a self-supported fibre layer 2, provided with an outer layer 5 or not. Preferably, the two joints between the two steel foils cut a short distance into the fibre layer 2. When drawn into place the inner layer 3 may be finally shaped into the shape of an inner space of the fibre layer 2, for example by pressing mandrel having a shape corresponding to the inner space of the fibre layer 2 along the length of the duct portion 1.

Preferably, there is no binding material between the fibre layer 2 and the inner layer 3. In this way the total energy content of the wall through connection can be kept low. However, an inorganic adhesive is conceivable to fix the inner layer 3 against the inner side of the fibre layer 2.

The duct portion 1 is attached at the wall 13 with at least one set of either a first sleeve couplings 6 or a second sleeve coupling 8. The set comprises two pieces of sleeve couplings arranged on opposite sides of the wall 13. Between each sleeve coupling and an outer surface of the duct portion 1, provided with or without an outer layer, an expandable fire sealing material 7, 21 is present. If a fire starts the expandable fire sealing material will expand by the heat and thus effectively seal so that no flue gases may penetrate.

Each first sleeve coupling 6 has a first flange 15, orthogonal to the length axis 14 along the elongated flow space 4, for connection to respective side of the wall 13. The connection could for example be provided by means of screws 22, rivet or the like. A rim portion 16 more or less parallel with the length axis 14, facing away from the wall 13 when arranged, provides a radial stop for an expanding fire sealing material 7 provided in between the outer surface of the duct portion 1 and the rim portion 16 of the first sleeve coupling 6. A second orthogonal flange 17 reaching from the rim portion 16 inwards to the outer surface of the duct portion 1, providing an axial stop for the fire expanding sealing material 7.

Each second sleeve coupling 8 has an orthogonal flange 19 and a sleeve 20 protruding into the throughgoing hole 9 covering up to half of the depth of the throughgoing hole 9 in the wall 13. Expanding fire sealing material 21 is provided between the sleeve 20 of the second sleeve coupling 8 and the outer surface of the duct portion 1.

The wall through connection must have one of the first 6 or second 8 sleeve coupling on each side of the wall 13. However, the opposite sides may have different sleeve couplings. In order to provide an even more temperature resistant wall through connection at least one side has both a first sleeve coupling 6 and a second sleeve coupling 8, wherein the second sleeve 8 coupling is attached between the first sleeve coupling 6 and the wall 13 on each side of the wall 13. An even better solution is to have both sleeve couplings 6, 8 on both sides of the wall 13.

In case of fire, the expanding fire sealing material expands but cannot expand outwards due to the rim 16 and sleeve 20, respectively. Thus, it will expand inwards and will compress the fibre layer against the inner layer 2 so that no flue gas may leak through the compress fibre layer. It is advantageous to have stiffening means at the inner layer 2 in order to safeguard against the inner layer 3 collapsing during a fire when the expandable fire seal material expand, at least if the inner layer 2 is very thin.

This could be achieved, for example, with one or more bands 10 of sheet metal provided on the inner side, facing the flow space 4, of the inner layer 2 transversely to the length of the duct portion 1. The band or bands may have a suitable width for the wall through connection.

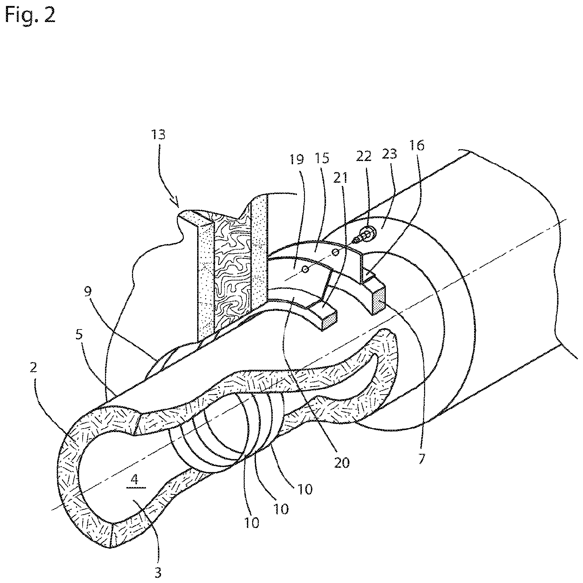

In Figs. 1 and 2 both sleeve couplings 6, 8 are arranged on opposite sides. Further, three bands 10 are arranged along the portion of the duct portion 1 corresponding to the expandable fire sealing material 7, 21. A cuff 23 may be arranged over the at least one sleeve coupling on each side of the wall 13 in order to further enhance the heat resistance of the wall through connection. Preferably the cuff comprises mineral fibres and a binder, compressed into a desired cuff shape that can enclose the at least one sleeve coupling. The mineral fibres have preferably a melting point over 800 degrees Celsius.

The joint between the cuff 23 and the wall 13 and the duct portion 1, respectively, may be provided with a sealing 24, preferably an expandable fire sealing material. It is possible to reinforce the open end 12 of the duct portion 1 with a stiffening means 11, such as a metal flange.

## Claims

1. A wall through connection comprising a duct portion (1) having a fibre layer (2) and an inner layer (3) surrounding an elongated flow space (4), wherein
- the fibre layer (2) comprises mineral fibres and a binder, compressed into a desired duct shape, the mineral fibres having a melting point over 800 degrees Celsius, and
- the inner layer (3) is a steel foil having a thickness of at least 0,01 mm, facing the flow space (4),
the wall through connection further comprising at least one of either a first set of sleeve couplings (6) or a second set of sleeve couplings (8), which are arranged on opposite sides of a wall (13) having a throughgoing hole (9) which shall receive the wall through connection, each first sleeve coupling (6) having a first flange (15), orthogonal to a length axis (14) along the elongated flow space (4), for connection to respective side of the wall (13), a rim portion (16) more or less parallel with the length axis (14), facing away from the wall when arranged, providing a radial stop for an expanding fire sealing material (7) provided in between an outer surface of the duct portion (1) and the rim portion (16) of the first sleeve coupling (6), and a second orthogonal flange (17) reaching from the rim portion (16) inwards to the outer surface of the duct portion (1), providing an axial stop for the fire expanding sealing material (7), each second sleeve coupling (8) has an orthogonal flange (19) and a sleeve (20) protruding into the throughgoing hole (9) covering up to half of the depth of the throughgoing hole in the wall, and expanding fire sealing material (21) is provided between the sleeve (20) of the second sleeve coupling (8) and the outer surface of the duct portion (1), and at least one stiffening means (10) is provided at the inner layer in line with the fire expandable sealing material.

2. The wall through connection according to claim 1, wherein both a first sleeve coupling (6) and a second sleeve coupling (8) are provided on each side of the wall (13), wherein the second sleeve coupling (8) is attached between the first sleeve coupling (6) and the wall (13) on each side of the wall, the second flange (19) is positioned between the first flange (15) of the first sleeve coupling (6) and the side of the wall.

3. The wall through connection according to claim 1, wherein two cuffs (23) provided one on each side of the wall (13) covering the sleeve coupling, the cuffs (23) are made of mineral fibres having a melting point over 800 degrees Celsius and a binder, compressed into a desired cuff shape.

4. The wall through connection according to claim 1, wherein an outer layer (5) is provided on the outside of the fibre layer (2), the outer layer comprises an aluminium foil (8) and a polyethene layer (6) for attachment to the fibre layer.

5. The wall through connection according to claim 1, wherein the steel foil is a stainless-steel foil.

6. The wall through connection according to claim 1, wherein the fibre (2) layer is self-supported.

7. The wall through connection according to claim 1, wherein the mineral fibre length is at least 10 mm, preferably at least 20 mm.

8. The wall through connection according to claim 1, wherein the binder is phenolic based and water soluble.

9. The wall through connection according to claim 1, wherein the ventilation duct (1) lacks binding material between the fibre layer (2) and the inner layer (3).

10. The wall through connection according to claim 1, wherein the cross-sectional shape of the duct portion is more or less circular.

11. A method of mounting a wall through connection comprising a duct portion (1) according to claim 1, comprising the steps: -bringing the duct portion (1) into a throughgoing hole (9) in a wall (13), mounting at least a first sleeve coupling (6) or a second sleeve coupling (8) on opposite sides of the wall (13) by either attaching a first orthogonal flange (15) to the side of the wall and positioning expanding fire sealing material (7) between a rim portion (16) of the first sleeve coupling and an outer surface of the duct portion (1) or by attaching an orthogonal flange (19) and positioning a sleeve (20) into the throughgoing hole covering up to half of the depth of the throughgoing hole in the wall (13), and positioning expanding fire sealing material (21) between the sleeve (20) of the second sleeve coupling (8) and the outer surface of the duct portion (1), and providing stiffening means (10, 11) at the inner layer (3), at least in line with the expanding fire sealing material.

12. The method according to claim 11, wherein both a first sleeve coupling (6) and a second sleeve coupling (8) are provided on opposite sides of the wall (13), whereby the second sleeve coupling (8) is situated between the first sleeve coupling and the wall (13) on each side of the wall, the second sleeve coupling (8) having an orthogonal flange (19) positioned between the first flange (15) of the first sleeve coupling (6) and the side of the wall (13).

13. The method according to claim 11, wherein two cuffs (23) are positioned, one on each side of the wall (13), covering the sleeve coupling, wherein the cuffs (23) are made of mineral fibres having a melting point over 800 degrees Celsius and a binder, compressed into a desired cuff shape.

## Patentansprüche

1. Wanddurchführung, umfassend einen Kanalabschnitt (1) mit einer Faserschicht (2) und einer Innenschicht (3), die einen länglichen Strömungsraum (4) umgeben, wobei
- die Faserschicht (2) Mineralfasern und ein Bindemittel umfasst, die zu einer gewünschten Kanalform verdichtet sind, wobei die Mineralfasern einen Schmelzpunkt von über 800 Grad Celsius haben, und
- die Innenschicht (3) eine Stahlfolie mit einer Dicke von mindestens 0,01 mm ist, die dem Strömungsraum (4) zugewandt ist,
wobei die Wanddurchführung ferner mindestens einen ersten Satz von Hülsenkupplungen (6) oder einen zweiten Satz von Hülsenkupplungen (8) umfasst, die auf gegenüberliegenden Seiten einer Wand (13) mit einem Durchgangsloch (9) angeordnet sind, die die Wanddurchführung aufnehmen soll, wobei jede erste Hülsenkupplung (6) einen ersten Flansch (15) aufweist, der orthogonal zu einer Längsachse (14) entlang des länglichen Strömungsraums (4) angeordnet ist, zur Verbindung mit der jeweiligen Seite der Wand (13), einen mehr oder weniger parallel zur Längsachse (14) verlaufenden Randbereich (16), der im angeordneten Zustand von der Wand weg zeigt und einen radialen Anschlag für ein sich ausdehnendes Feuerdichtmaterial (7) bildet, das zwischen einer Außenfläche des Kanalabschnitts (1) und dem Randbereich (16) der ersten Hülsenkupplung (6) vorgesehen ist, und einen zweiten orthogonalen Flansch (17), der von dem Randbereich (16) nach innen zu der Außenfläche des Kanalabschnitts (1) reicht und einen axialen Anschlag für das feuerausdehnbare Dichtmaterial (7) bildet, wobei jede zweite Hülsenkupplung (8) einen orthogonalen Flansch (19) und eine Hülse (20) aufweist, die in das Durchgangsloch (9) hineinragt und bis zur Hälfte der Tiefe des Durchgangslochs in der Wand abdeckt, und ein sich ausdehnendes Feuerdichtmaterial (21) zwischen der Hülse (20) der zweiten Hülsenkupplung (8) und der Außenfläche des Kanalabschnitts (1) vorgesehen ist, und mindestens ein Versteifungsmittel (10) an der inneren Schicht in einer Linie mit dem feuerausdehnbaren Feuerdichtmaterial vorgesehen ist.

2. Wanddurchführung gemäß Anspruch 1, wobei sowohl eine erste Hülsenkupplung (6) als auch eine zweite Hülsenkupplung (8) auf jeder Seite der Wand vorgesehen sind (13) vorgesehen sind, wobei die zweite Hülsenkupplung (8) zwischen der ersten Hülsenkupplung (6) und der Wand (13) auf jeder Seite der Wand angebracht ist, wobei der zweite Flansch (19) zwischen dem ersten Flansch (15) der ersten Hülsenkupplung (6) und der Seite der Wand positioniert ist.

3. Wanddurchführung gemäß Anspruch 1, wobei zwei Manschetten (23) vorgesehen sind, eine auf jeder Seite der Wand (13), die die Hülsenkupplung abdecken, wobei die Manschetten (23) aus Mineralfasern mit einem Schmelzpunkt über 800 Grad Celsius und einem Bindemittel gefertigt sind, die zu einer gewünschten Manschettenform gepresst sind.

4. Wanddurchführung gemäß Anspruch 1, wobei an der Außenseite der Faserschicht (2) eine Außenschicht (5) vorgesehen ist, die eine Aluminiumfolie (8) und eine Polyethylenschicht (6) zur Befestigung an der Faserschicht umfasst.

5. Wanddurchführung gemäß Anspruch 1, wobei die Stahlfolie eine Edelstahlfolie ist.

6. Wanddurchführung gemäß Anspruch 1, wobei die Faserschicht (2) selbsttragend ist.

7. Die Wanddurchführung gemäß Anspruch 1, wobei die Länge der Mineralfaser mindestens 10 mm, vorzugsweise mindestens 20 mm beträgt.

8. Wanddurchführung gemäß Anspruch 1, wobei das Bindemittel auf Phenolbasis und wasserlöslich ist.

9. Wanddurchführung gemäß Anspruch 1, wobei der Lüftungskanal (1) kein Bindematerial zwischen der Faserschicht (2) und der Innenschicht (3) aufweist.

10. Wanddurchführung gemäß Anspruch 1, wobei die Querschnittsform des Kanalabschnitts mehr oder weniger kreisförmig ist.

11. Verfahren zum Anbringen einer Wanddurchführung mit einem Kanalabschnitt (1) gemäß Anspruch 1, das die folgenden Schritte umfasst: -Einführen des Kanalabschnitts (1) in ein Durchgangsloch (9) in einer Wand (13), Befestigen mindestens einer ersten Hülsenkupplung (6) oder einer zweiten Hülsenkupplung (8) auf gegenüberliegenden Seiten der Wand (13), indem entweder ein erster orthogonaler Flansch (15) an der Seite der Wand angebracht und ein sich ausdehnendes Feuerdichtmaterial (7) zwischen einem Randbereich (16) der ersten Hülsenkupplung und einer Außenfläche des Kanalabschnitts (1) positioniert wird oder indem ein orthogonaler Flansch (19) angebracht wird und eine Hülse (20) in dem Durchgangsloch, das bis zur Hälfte der Tiefe des Durchgangslochs in der Wand (13) abdeckt, positioniert wird und Positionieren sich ausdehnenden Feuerdichtmaterials (21) zwischen der Hülse (20) der zweiten Hülsenkupplung (8) und der Außenfläche des Kanalabschnitts (1), und Bereitstellen von Versteifungsmittel (10, 11) an der Innenschicht (3), zumindest in einer Linie mit dem sich ausdehnenden Feuerdichtmaterial.

12. Verfahren nach Anspruch 11, wobei sowohl eine erste Hülsenkupplung (6) als auch eine zweite Hülsenkupplung (8) auf gegenüberliegenden Seiten der Wand (13) bereitgestellt werden, wobei die zweite Hülsenkupplung (8) zwischen der ersten Hülsenkupplung und der Wand (13) auf jeder Seite der Wand platziert wird, wobei die zweite Hülsenkupplung (8) einen orthogonalen Flansch (19) aufweist, der zwischen dem ersten Flansch (15) der ersten Hülsenkupplung (6) und der Seite der Wand (13) positioniert ist.

13. Verfahren nach Anspruch 11, wobei zwei Manschetten (23) positioniert werden, eine auf jeder Seite der Wand (13), die die Hülsenkupplung abdecken, wobei die Manschetten (23) aus Mineralfasern mit einem Schmelzpunkt über 800 Grad Celsius und einem Bindemittel gefertigt sind, die zu einer gewünschten Manschettenform komprimiert sind.

## Revendications

1. Raccord à travers le mur comprenant une partie conduit (1) comportant une couche de fibres (2) et une couche interne (3) entourant un espace de flux allongé (4), dans lequel
- la couche de fibres (2) comprend des fibres minérales et un liant, compressés en une forme désirée de conduit, les fibres minérales ayant un point de fusion supérieur à 800 degrés Celsius, et
- la couche interne (3) est une feuille d'acier ayant une épaisseur d'au moins 0,01 mm, faisant face à l'espace de flux (4),
le raccord à travers le mur comprenant en outre un premier ensemble d'accouplements manchonnés (6) et/ou un deuxième ensemble d'accouplements manchonnés (8), qui sont placés sur des côtés opposés d'un mur (13) ayant un trou de passage (9) qui doit recevoir le raccord à travers le mur, chaque accouplement manchonné (6) ayant une première bride (15), orthogonale à un axe de longueur (14) le long de l'espace de flux allongé (4), pour le raccordement au côté respectif du mur (13), une partie bordure (16) plus ou moins parallèle à l'axe de longueur (14), située à l'opposé du mur une fois placée, fournissant une butée radiale pour un matériau coupe-feu expansible (7) disposé entre une surface extérieure de la partie conduit (1) et la partie bordure (16) du premier accouplement manchonné (6), et une deuxième bride orthogonale (17) allant de la partie bordure (16) vers l'intérieur à la surface extérieure de la partie conduit (1), fournissant une butée axiale pour le matériau coupe-feu expansible (7), chaque deuxième accouplement manchonné (8) a une bride orthogonale (19) et un manchon (20) saillant dans le trou de passage (9) recouvrant jusqu'à la moitié de la profondeur du trou de passage dans le mur, et un matériau coupe-feu expansible (21) est disposé entre le manchon (20) du deuxième accouplement manchonné (8) et la surface extérieure de la partie conduit (1), et au moins un moyen de rigidification (10) est disposé au niveau de la couche interne, aligné avec le matériau coupe-feu expansible.

2. Raccord à travers le mur selon la revendication 1, dans lequel à la fois un premier accouplement manchonné (6) et un deuxième accouplement manchonné (8) sont disposés de chaque côté du mur (13), dans lequel le deuxième accouplement manchonné (8) est fixé entre le premier accouplement manchonné (6) et le mur (13) de chaque côté du mur, la deuxième bride (19) est positionnée entre la première bride (15) du premier accouplement manchonné (6) et le côté du mur.

3. Raccord à travers le mur selon la revendication 1, dans lequel deux manchettes (23) sont disposées, une de chaque côté du mur (13) recouvrant l'accouplement manchonné, les manchettes (23) sont fabriquées en fibres minérales ayant un point de fusion supérieur à 800 degrés Celsius et en un liant, compressés en une forme désirée de manchette.

4. Raccord à travers le mur selon la revendication 1, dans lequel une couche externe (5) est disposée sur l'extérieur de la couche de fibres (2), la couche extérieure comprend une feuille d'aluminium (8) et une couche de polyéthylène (6) pour la fixation à la couche de fibres.

5. Raccord à travers le mur selon la revendication 1, dans lequel la feuille d'acier est une feuille d'acier inoxydable.

6. Raccord à travers le mur selon la revendication 1, dans lequel la couche de fibres (2) est auto-supportée.

7. Raccord à travers le mur selon la revendication 1, dans lequel la longueur de fibre minérale est d'au moins 10 mm, de préférence d'au moins 20 mm.

8. Raccord à travers le mur selon la revendication 1, dans lequel le liant est à base phénolique et hydrosoluble.

9. Raccord à travers le mur selon la revendication 1, dans lequel le conduit de ventilation (1) est dépourvu de matière de liaison entre la couche de fibres (2) et la couche interne (3).

10. Raccord à travers le mur selon la revendication 1, dans lequel la forme de section transversale de la partie conduit est plus ou moins circulaire.

11. Procédé de montage d'un raccord à travers le mur comprenant une partie conduit (1) selon la revendication 1, comprenant les étapes de : - introduction de la partie conduit (1) dans un trou de passage (9) dans un mur (13), montage d'un premier accouplement manchonné (6) et/ou d'un deuxième accouplement manchonné (8) sur des côtés opposés du mur (13) soit par fixation d'une première bride orthogonale (15) au côté du mur et positionnement du matériau coupe-feu expansible (7) entre une partie bordure (16) du premier accouplement manchonné et une surface extérieure de la partie conduit (1) soit par fixation d'une bride orthogonale (19) et positionnement d'un manchon (20) dans le trou de passage recouvrant jusqu'à la moitié de la profondeur du trou de passage dans le mur (13), et positionnement du matériau coupe-feu expansible (21) entre le manchon (20) du deuxième accouplement manchonné (8) et la surface extérieure de la partie conduit (1), et disposition de moyens de rigidification (10, 11) au niveau de la couche interne (3), au moins alignés avec le matériau coupe-feu expansible.

12. Procédé selon la revendication 11, dans lequel à la fois un premier accouplement manchonné (6) et un deuxième accouplement manchonné (8) sont placés sur des côtés opposés du mur (13), moyennant quoi le deuxième accouplement manchonné (8) est situé entre le premier accouplement manchonné et le mur (13) de chaque côté du mur, le deuxième accouplement manchonné (8) ayant une bride orthogonale (19) positionnée entre la première bride (15) du premier accouplement manchonné (6) et le côté du mur (13).

13. Procédé selon la revendication 11, dans lequel deux manchettes (23) sont positionnées, une de chaque côté du mur (13), recouvrant l'accouplement manchonné, dans lequel les manchettes (23) sont fabriquées en fibres minérales ayant un point de fusion supérieur à 800 degrés Celsius et en un liant, compressés en une forme désirée de manchette.
